Europäisches Patentamt

European Patent Office

Office européen des brevets

(11) Veröffentlichungsnummer: **0 518 015 A2**

## (12) EUROPÄISCHE PATENTANMELDUNG

(21) Anmeldenummer: **92105740.2**

(22) Anmeldetag: **03.04.92**

(51) Int. Cl.5: **H04B 7/26**, H04Q 7/04

(30) Priorität: **14.06.91 DE 4119673**

(43) Veröffentlichungstag der Anmeldung:
**16.12.92 Patentblatt 92/51**

(84) Benannte Vertragsstaaten:
**AT BE CH DE DK ES FR GB GR IT LI LU MC NL PT SE**

(71) Anmelder: **HAGENUK GMBH**
**Westring 431**
**W-2300 Kiel 1(DE)**

(72) Erfinder: **Behrent, Hermann, Dipl.-Ing.**
**Langenstücken 14**
**W-2071 Kuddewörde(DE)**

(74) Vertreter: **Hansmann, Dierk, Dipl.-Ing.**
**Patentanwälte**
**Hansmann-Klickow-Hansmann**
**Jessenstrasse 4**
**W-2000 Hamburg 50(DE)**

(54) **Steuereinrichtung zur Koordinierung eines Zugriffs auf den Übertragungskanal einer Kommunikationsanlage.**

(57) Die Vorrichtung zur Steuerung einer Einrichtung zur Übertragung von Informationen ist insbesondere geeignet, um im Bereich von Telekommunikationsanlagen verwendet zu werden. Es können mindestens zwei Kommunikationsgeräte an einen gemeinsamen Übertragungskanal angeschlossen werden. Zur Koordinierung eines Zugriffes auf den Übertragungskanal sind Steuersequenzen vorgesehen. Die kodierte Erzeugung mindestens einer der Steuersequenzen wird mit Hilfe eines umordbaren Registers vorgenommen, dessen Ausgang mit einem Komparator verbunden ist. Im Bereich des Komparators wird eine Sekundärsequenz durch einen Vergleich eines Ausgangswertes des Registers mit einem einer Verbindungsidentität zugeordneten Parametersatz generiert.

Fig. 1

Die Erfindung betrifft eine Vorrichtung zur Steuerung einer Einrichtung zur Übertragung von Informationen, insbesondere zur Verwendung im Bereich von Telekommunikationsanlagen, die mindestens zwei Kommunikationsgeräte an einen gemeinsamen Übertragungskanal anschließt und zur Koordinierung eines Zugriffes auf den Übertragungskanal Steuersequenzen generiert.

Derartige Vorrichtungen werden beispielsweise benötigt, um im Bereich der Telekommunikation einen Zugriff von mobilen Telefonen, schnurlosen Telefonen oder Datenübertragungsgeräten auf einen gemeinsamen Übertragungskanal zu koordinieren. Zur Durchführung dieser Koordinierung sind unterschiedliche Verfahren bekannt. Zum einen ist es möglich, einen zur Übertragung zur Verfügung stehenden Frequenzbereich des Übertragungskanales zu unterteilen und jeder herstellbaren Verbindung eine bestimmte Trägerfrequenz innerhalb des Frequenzbandes zuzuordnen. Hierzu ist es allerdings erforderlich, einen Frequenzplan oder zumindest eine Trägererkennung vorzusehen. Die Durchführung dieses Verfahrens ist jedoch mit einer Reihe von Nachteilen verbunden. Insbesondere sind dies andauernde Interferenzerscheinungen sowie Intermodulationen. Eine derartige Aufteilung des zur Verfügung stehenden Frequenzbandes wird auch als FDMA (Frequency Division Multiple Access) bezeichnet.

Nach einem anderen bekannten Verfahren wird die zur Übertragung von Informationen verfügbare Übertragungszeit in Zeitabschnitte unterteilt, die jeweils einer herzustellenden aktiven Verbindung zugeordnet sind. Zur Durchführung dieses Verfahrens ist eine Synchronisation sowie ein Zeitplan erforderlich. Insbesondere bei sporadisch zugreifenden Systemen ist darüber hinaus eine Entflechtung bei Zugriffskollisionen erforderlich. Bei der Durchführung dieses Verfahrens treten gleichfalls eine Vielzahl von Problemen auf. Insbesondere sind hier Echounterdrückungen bei größeren Signalverzögerungen erforderlich und Folgekollisionen müssen durch spezielle Ablaufsteuerungen vermieden werden. Dieses Verfahren wird auch als TDMA (Time Division Multiple Access) bezeichnet.

Bei einem weiteren bekannten Verfahren wird jeder aktiv herstellbaren Verbindung eine kodierte Sequenz zugeordnet, durch die die Belegung des zur Verfügung stehenden Frequenzbandes gesteuert wird. Die Kodierung ermöglicht eine Unterscheidung einer hergestellten Verbindung von anderen zeitlichen parallel oder sich teilweise überschneidend hergestellten anderen Verbindungen. Durch diese kodierten Sequenzen ist es möglich, eine erhebliche Verbindungsdichte herzustellen und auf organisatorische Maßnahmen wie Frequenzpläne, Zeitpläne und Synchronisierungen zu verzichten. Schließlich ist es auch möglich, mit Hilfe von kodierten Sequenzen gekennzeichnete Verbindungen gemischt mit anderen Verbindungen herzustellen, die nach einem der beiden zuerst genannten Verfahren hergestellt wurden. Eine mit kodierten Sequenzen gesteuerte Übertragung wird als CDMA (Code Division Multiple Access) bezeichnet.

Zur Ermöglichung einer hohen Qualitätsanforderung genügenden Informationsübertragung mit Hilfe von kodierten Sequenzen ist es erforderlich, ausreichend unterschiedliche Sequenzen bereitzustellen, um dadurch gegenseitige Störungen bei einer Herstellung von unterschiedlichen Verbindungen zu vermeiden.

Aufgabe der vorliegenden Erfindung ist es daher, eine Vorrichtung der einleitend genannten Art so zu verbessern, daß universell verwendbare Steuersequenzen zur funktionsgerechten Koordinierung eines Zugriffs auf ein Mittel zur Informationsübertragung bereitgestellt werden.

Diese Aufgabe wird erfindungsgemäß dadurch gelöst, daß zur kodierten Erzeugung mindestens einer Steuersequenz ein umordbares Register vorgesehen ist, dessen Ausgang mit einem Komparator verbunden ist, der eine Sekundärsequenz durch einen Vergleich eines Ausgangswertes des rückgekoppelten Registers mit einem einer Verbindungsidentität zugeordneten Parametersatz generiert.

Diese Erzeugung einer Sekundärsequenz ermöglicht es, minimal korrellierte Steuersequenzen zur Koordinierung der Informationsübertragung bereitzustellen. Die Vorrichtung kann mit vergleichsweise einfachen elektronischen Bauelementen realisiert werden. Insbesondere ist es jedoch auch möglich, die Erzeugung der Steuersequenzen mindestens teilweise von geeignet programmierten Digitalrechnern vornehmen zu lassen. Dies hat den Vorteil, daß mit geringem Aufwand Spezifikationsänderungen berücksichtigt werden können.

Zur Ermöglichung einer Bereitstellung von lediglich minimal korrellierten Steuersequenzen wird vorgeschlagen, daß die Rückkopplung des einen Sequenzgenerator teilweise ausbildenden Registers von einem Kombinator gesteuert ist, der ein über eine Rückführung des Registers bereitgestelltes Signal in Abhängigkeit von einem Parametersatz zurückführt, der in einem Parameterspeicher abgelegt ist und einem primitiven irreduziblen Polynom zugeordnet ist.

Eine Berücksichtigung des nutzbaren Frequenzbereiches eines zur Signalmodulierung und Signaldemodulierung verwendeten Frequenzgenerators erfolgt dadurch, daß ein Ausgang des Komparators mit einem Summierwerk verbunden ist, das das Ausgangssignal des Komparators mit einem Offset verknüpft, der im Bereich eines Parameterspeichers abgelegt ist und einer einer Eckgröße eines Generators zur Bereitstellung eines Wertes entspricht, der einer Zugriffsentscheidung zugeordnet ist.

Ein Minimum von Korrelationen zwischen den Steuersequenzen kann dadurch gewährleistet werden, daß eine vom Register generierte Primärsequenz von Null verschieden ist und Elemente enthält, deren positiv ganzzahlige Werte in einem von Null und einer Primzahl begrenzten Intervall liegen. Insbesondere ist daran gedacht, das Intervall derart zu begrenzen, das Null innerhalb und die Primzahl außerhalb des Intervalles liegt.

Eine Vermeidung von störenden deterministischen Abhängigkeiten zwischen den Steuersequenzen wird dadurch unterstützt, daß die Elemente der Primärsequenz innerhalb eines geschlossenen Zahlenkörpers durch eine ganzzahlige Divisionsverknüpfung einer Größe und des im Bereich des Parameterspeichers abgelegten irreduziblen Polynoms festgelegt werden und den jeweiligen Elementen der Primärsequenz ein bei der Durchführung der betreffenden ganzzahligen Division verbleibender ganzzahliger Rest zugewiesen wird.

Zur Kombination eines Nutzsignales mit einem Trägersignal und zur Abscheidung eines Trägersignalanteiles bei einer empfangenen Information wird vorgeschlagen, daß ein Ausgangssignal eines als Frequenzgenerator ausgebildeten Generators im Bereich eines Mischers mit einem zwischen einem Kommunikator und einer Schnittstelle ausgetauschten Nutzsignalanteil kombiniert wird. Hierdurch wird eine Modulation bzw. eine Demodulation realisiert.

Eine zuverlässige Verfügbarkeit und ein schneller Zugriff auf benötigte Steuerdaten wird dadurch ermöglicht, daß mindestens einer der im Bereich der Parameterspeicher abgelegten Parametersätze digitalisiert abgelegt ist.

Zur Verteilung der innerhalb eines verfügbaren Spektrums bereitgestellten Frequenzen nach optimierten Kriterien wird vorgeschlagen, daß der Generator zur Umsetzung von Signalen im Bereich einer Kommunikationsanlage angeordnet ist, die codegesteuerte Verbindungen bereitstellt.

Zur Verbesserung der Funktionsfähigkeit eines die Belegung des Übertragungskanales koordinierenden Verfahrens wird vorgeschlagen, daß die im Bereich des Summierwerkes verfügbare Steuersequenz einer Steuereinrichtung zur Festlegung einer Zeitschranke zugeführt wird, die zur Entflechtung von Zugriffskonflikten im Bereich einer Kommunikationsanlage vorgesehen ist, bei der einer herzustellenden Verbindung ein bestimmter Zeitabschnitt zugeordnet ist. Hierdurch ist es möglich, sporadisch auf das verfügbare Spektrum zuzugreifen. Durch die bereitgestellten Steuersequenzen ist es möglich, eine Entflechtung zur Reduzierung von Zugriffskollisionen und zur Vermeidung von Folgekonflikten durchzuführen. Jedem anschließbaren Kommunikationsgerät werden unterschiedliche Zeitschranken zugeordnet, nach denen eine Zugriffswiederholung erlaubt ist. Durch die Verwendung der Steuersequenzen ist es möglich, die Zeitschranken dezentral und codegeneriert bereitzustellen. Hieraus resultiert, daß jedes Kommunikationsgerät im Mittel seiner Betriebsdauer gleichberechtigt und gleichwahrscheinlich wie die weiteren Kommunikationsgeräte auf den Übertragungskanal zugreifen kann. Bei einer Belegung des Übertragungskanales unterhalb einer maximalen Anlagendurchsatzrate ist somit für jedes angeschlossene Kommunikationsgerät ein erfolgreicher Zugriff garantiert. Bei einer Kanalbeobachtung ist es möglich, die Anzahl von Folgekollisionen zu minimieren und hierdurch eine typische Reduzierung des Durchsatzes bei einer beschränkten Zahl am Kommunikationsgeräten zu vermeiden.

Eine Verbesserung eines Zugriffes auf den Übertragungskanal kann auch dadurch erfolgen, daß die im Bereich des Summierwerkes verfügbare Steuersequenz einer Steuereinheit zugeführt ist, mit deren Hilfe eine Kanalanwahl zur Entflechtung von Zugriffskonflikten im Bereich einer Kommunikationsanlage durchgeführt wird, bei der einer herstellbaren Verbindung eine bestimmte Trägerfrequenz zugeordnet ist. Auch hierdurch wird ein sporadischer Zugriff auf die Übertragungskanäle ermöglicht. Eine Vermeidung von Kollisionen erfolgt durch eine Entflechtung, die im wesentlichen auf einem Kanalwechsel beruht. Durch die zur Verfügung gestellten codegenerierten Steuersequenzen kann die Entflechtung zielstrebig, sicher und dezentral durchgeführt werden. Auch bei dieser Betriebsweise wird gewährleistet, daß jedes angeschlossene Kommunikationsgerät im Mittel seiner Betriebsdauer gleichberechtigt und gleichwahrscheinlich mit den weiteren Kommunikationsgeräten auf den Übertragungskanal zugreifen kann. Bei einer Beanspruchung des Übertragungskanales unterhalb einer maximalen Durchsatzrate wird auch hier ein sicherer Zugriff für jedes angeschlossene Kommunikationsgerät gewährleistet. Bei einer gleichzeitig durchgeführten Kanalbeobachtung kann auch hier die Anzahl der Folgekollisionen minimiert werden.

In der Zeichnung sind Ausführungsbeispiele der Erfindung schematisch dargestellt. Es zeigen:

Fig. 1      ein vereinfachtes Blockschaltbild einer Vorrichtung zur Übertragung von Informationen **und**

Fig. 2      ein vereinfachtes Blockschaltbild eines codegesteuerten Sequenzgenerators.

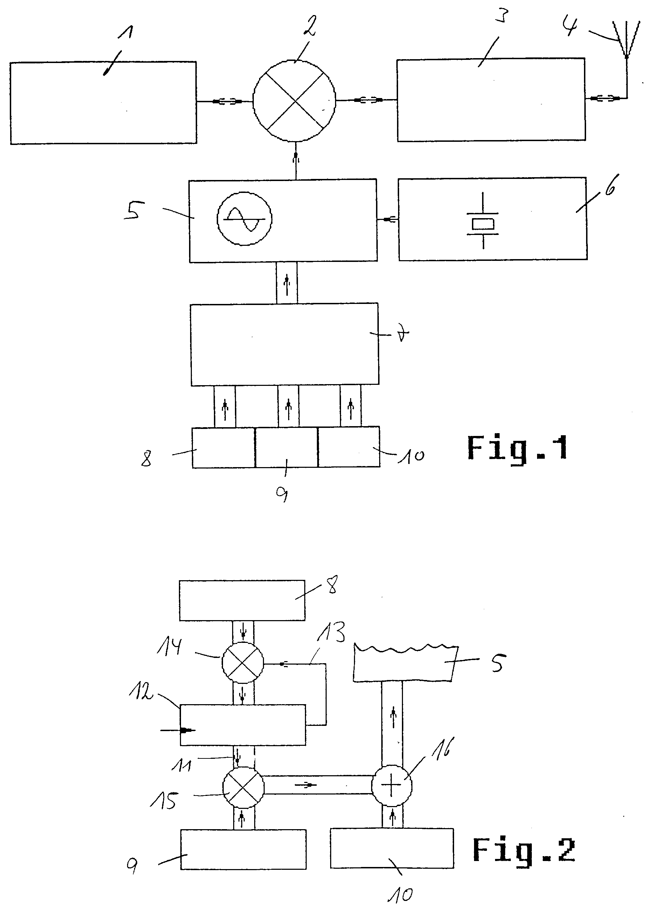

Die in Figur 1 dargestellte Vorrichtung zur Informationsübertragung besteht im wesentlichen aus einem Kommunikator (1), der vorzugsweise als kombinierter Nutzsignalgenerator und Nutzsignalrezeptor ausgebildet ist. Der Kommunikator (1) ist an einen Mischer (2) angeschlossen, mit dessen Hilfe sowohl eine Signalübertragung zum Kommunikator (1) als auch eine Weiterleitung von Informationen ermöglicht wird, die vom Kommunikator (1) bereitgestellt werden. Der Mischer (2) ist mit einer Schnittstelle (3) verbunden, die über einen Übertragungskanal eine Verbindung mit weiteren Kommunikationsgeräten ermöglicht. Die Schnittstelle (3) ist zur Aussendung von Informationen mit einer Endstufe und zur Aufnahme von Informationen mit einem Empfangsteil versehen. Eine drahtlose Verbindung kann mit Hilfe einer Antenne (4) erfolgen.

Im Bereich des Mischers (2) wird ein vom Kommunikator (1) bereitgestelltes Signal mit einem Trägersignal eines als Frequenzgenerator ausgebildeten Generators (5) kombiniert. Darüber hinaus erfolgt eine Eliminierung von Trägersignalanteilen von modulierten Signalen, die von der Schnittstelle (3) in Richtung auf den Kommunikator (1) übertragen werden. Der Generator (5) ist als eine schnellumgetastete Einheit ausgebildet. Zum Betrieb des Generators (5) ist ein Referenzfrequenzgenerator (6) sowie ein Sequenzgenerator (7) vorgesehen. Der Sequenzgenerator (7) legt eine vom Generator (5) bereitgestellte Trägerfrequenz fest und wird von einstellbaren Parameterspeichern (8,9,10) gesteuert. Statt einer Ausbildung des Generators (5) als Frequenzgenerator kann auch eine Ausbildung beispielsweise als Zeitgenerator resultiert werden.

In Figur 2 ist der Aufbau des Sequenzgenerators (7) sowie die Verbindung der jeweiligen Elemente des Sequenzgenerators (7) mit den Parameterspeichern (8,9,10) dargestellt. Zur Erzeugung einer Primärsequenz, die im Bereich eines Ausganges (11) eines beispielsweise als Schieberegister ausgebildeten Registers (12) verfügbar ist, ist das Register (12) über eine Rückführung (13) rückgekoppelt. Die Rückführung (13) wird im Bereich eines Kombinators (14) mit Hilfe eines Parametersatzes verändert, der vom Parameterspeicher (8) zur Verfügung gestellt wird. Das Ausgangssignal des Kombinators (14) wird dem Register (12) als Eingangssignal zur Verfügung gestellt. Der im Bereich des Parameterspeichers (8) bevorratete Parametersatz beschreibt ein primitives irreduzibles Polynom.

Die im Bereich des Ausganges (11) bereitgestellte Primärsequenz ist von Null verschieden und weist Elemente auf, deren positiv ganzzahlige Werte innerhalb eines von einer vorgebbaren Primzahl begrenzten Intervalles festgelegt werden. Insbesondere ist daran gedacht, die Anzahl der von Null verschiedenen Elemente der Primärsequenz durch eine m-te Potenz einer Primzahl abzüglich des Wertes "1" festzulegen.

Die Primärsequenz am Ausgang (11) wird im Bereich eines Komparators (15) bei einer angenommenen digitalen Abspeicherung bitweise mit einem Parametersatz verglichen, der im Bereich des Parameterspeichers (9) abgelegt ist. Der Parametersatz im Bereich des Parameterspeichers (9) entspricht einer Verbindungsidentität und somit einem den Ablauf steuernden Code. Die Verknüpfung der Primärsequenz sowie des Parametersatzes aus dem Parameterspeicher (9) erfolgt derart, daß die Elemente der Primärsequenz mit den Elementen des im Bereich des Parameterspeichers (9) abgelegten Parametersatzes verglichen und hierdurch eine vom Komparator (15) bereitgestellte Sekundärsequenz hergestellt wird. Die Sekundärsequenz wird einem Summierwerk (16) zugeführt, in dessen Bereich eine Verknüpfung der Sekundärsequenz mit einem im Bereich des Parameterspeichers (10) abgelegten Parametersatz erfolgt. Der Parametersatz im Bereich des Parameterspeichers (10) entspricht einem Wert, der eine Eckfrequenz eines verfügbaren Frequenzspektrums im Bereich des Generators (5) wiedergibt. Das Ausgangssignal des Summierwerkes (16) wird dem Generator (5) zugeführt.

Das vom Parameterspeicher (8) bereitgestellte primitive irreduzible Polynom weist einen Grad $m$ auf und bei einer Indizierung der Elemente der Primärsequenz von Null bis zur m-ten Potenz der ausgewählten Primzahl abzüglich "2" ergibt sich das i-te Element der Primärsequenz aus einer Divisionsverknüpfung der i-ten Potenz der ausgewählten Primärzahl und einem jeweils zugeordneten Element des primitiven irreduziblen Polynoms. Die Divisionsvernüpfung wird dabei so durchgeführt, daß die i-te Potenz des irreduziblen Polynoms im endlichen Zahlenkörper durch das zugeordnete Element des Polynoms geteilt wird und ein bei einer ganzzahlig durchgeführten Division verbleibender ganzzahliger Rest dem betreffenden Element der Primärsequenz zugeordnet wird.

Durch die Kombination der Bauelemente gemäß Figur 2 wird zu jeder im Bereich des Parameterspeichers (9) abgelegten Verbindungsidentität eine andere Sekundärsequenz und somit auch eine andere Steuersequenz zur Beaufschlagung des Frequenzgenerators (5) erzeugt. Alle Steuersequenzen weisen relativ zueinander eine minimale Korrelation auf. Jede der Steuersequenzen ist im wesentlichen aus den gleichen Elementen aufgebaut, eine Variation ist jedoch durch die Reihenfolge der Anordnung der einzelnen Elemente gegeben. Ein Gleichlauf der Steuersequenzen zur Gewährleistung einer minimalen Korrelation ist nicht erforderlich.

**Patentansprüche**

1. Vorrichtung zur Steuerung einer Einrichtung zur Übertragung von Informationen, insbesondere zur Verwendung im Bereich von Telekommunikationsanlagen, die mindestens zwei Kommunikationsgeräte an einen gemeinsamen Übertragungskanal anschließt und zur Koordinierung eines Zugriffes auf den Übertragungskanal Steuersequenzen generiert, dadurch gekennzeichnet, daß zur kodierten Erzeugung mindestens einer der Steuersequenzen ein umordbares Register (12) vorgesehen ist, dessen Ausgang mit einem Komparator (15) verbunden ist, der eine Sekundärsequenz durch einen Vergleich eines Ausgangswertes des Registers (12) mit einem einer Verbindungsidentität zugeordneten Parametersatz ge neriert.

2. Vorrichtung nach Anspruch 1, dadurch gekennzeichnet, daß die Rückkopplung des einen Sequenzgenerator (7) teilweise ausbildenden Registers (12) von einem Kombinator (14) gesteuert ist, der ein über eine Rückführung (13) des Registers (12) bereitgestelltes Signal in Abhängigkeit von einem Parametersatz zurückführt, der in einem Parameterspeicher (8) abgelegt ist und einem primitiven irreduziblen Polynom zugeordnet ist.

3. Vorrichtung nach Anspruch 1 oder 2, dadurch gekennzeichnet, daß ein Ausgang des Komparators (15) mit einem Summierwerk (16) verbunden ist, das das Ausgangssignal des Komparators (15) mit einem Offset verknüpft, der im Bereich eines Parameterspeichers (10) abgelegt ist und einem einer Eckgröße eines Generators (5) zur Bereitstellung eines Wertes entspricht, der einer Zugriffsentscheidung zugeordnet ist.

4. Vorrichtung nach einem der Ansprüche 1 bis 3, dadurch gekennzeichnet, daß eine vom Register (12) generierte Primärsequenz von Null verschieden ist und Elemente enthält, deren positiv ganzzahlige Werte in einem von Null und einer Primzahl begrenzten Intervall liegen.

5. Vorrichtung nach einem der Ansprüche 1 bis 4, dadurch gekennzeichnet, daß die Elemente der Primärsequenz innerhalb einer geschlossenen Zahlenkörpers durch eine ganzzahlige Divisionsverknüpfung einer Größe und des im Bereich des Parameterspeichers (8) abgelegten irreduziblen Polynoms festgelegt werden und den jeweiligen Elementen der Primärsequenz ein bei der Durchführung der betreffenden ganzzahligen Division verbleibender ganzzahliger Rest zugewiesen wird.

6. Vorrichtung nach einem der Ansprüche 1 bis 5, dadurch gekennzeichnet, daß ein Ausgangssignal eines als Frequenzgenerator ausgebildeten Generators (5) im Bereich eines Mischers (2) mit einem zwischen einem Kommunikator (1) und einer Schnittstelle (3) ausgetauschten Nutzsignalanteil kombiniert wird.

7. Vorrichtung nach einem der Ansprüche 1 bis 6, dadurch gekennzeichnet, daß mindestens einer der im Bereich der Parameterspeicher (8,9,10) abgelegten Parametersätze digitalisiert abgelegt ist.

8. Vorrichtung nach einem der Ansprüche 1 bis 7, dadurch gekennzeichnet, daß der Generator (5) zur Umsetzung von Signalen im Bereich einer Kommunikationsanlage angeordnet ist, die codegesteuerte Verbindungen bereitstellt.

9. Vorrichtung nach einem der Ansprüche 1 bis 7, dadurch gekennzeichnet, daß die im Bereich des Summierwerkes (16) verfügbare Steuersequenz einer Steuereinrichtung zur Festlegung einer Zeitschranke zugeführt wird, die zur Entflechtung von Zugriffskonflikten im Bereich einer Kommunikationsanlage vorgesehen ist, bei der einer herzustellenden Verbindung ein bestimmter Zeitabschnitt zugeordnet ist.

10. Vorrichtung nach einem der Ansprüche 1 bis 7, dadurch gekennzeichnet, daß die im Bereich des Summierwerkes (16) verfügbare Steuersequenz einer Steuereinheit zugeführt ist, mit deren Hilfe eine Kanalanwahl zur Entflechtung von Zugriffskonflikten im Bereich einer Kommunikationsanlage durchgeführt wird, bei der einer herstellbaren Verbindung eine bestimmte Trägerfrequenz zugeordnet ist.

**Fig.1**

**Fig.2**